# EUROPEAN PATENT APPLICATION

(11) **EP 3 309 425 A1**
(43) Date of publication of application: **18.04.2018**
(21) Application number: 16807228.8
(22) Date of filing: 28.04.2016
(51) Int. Cl.: F16H 3/72, F16H 1/16, F16H 3/54

(54) **SPEED CHANGE MECHANISM**

(30) Priority: 09.06.2015 JP 2015116311
(71) Applicant: NEC Corporation, Tokyo 108-8001 (JP)
(72) Inventor: MIZUMOTO, Hisashi, Tokyo 108-8001 (JP); ASAI, Shigeru, Tokyo 108-8001 (JP)
(74) Representative: Vossius & Partner Patentanwälte Rechtsanwälte mbB
(86) International application number: PCT/JP2016/063333
(87) International publication number: WO 2016/199521

(57) **Abstract**

Provided is a speed change mechanism including a first input section (10), a second input section (20), a planetary gear mechanism (30), and an output section (40). The planetary gear mechanism (30) includes a planetary worm wheel (31), a sun gear (32), and a plurality of planetary gears (33). The planetary worm wheel (31) includes internal teeth and external teeth, the external teeth mesh with a first worm (15), and the planetary worm wheel (31) rotates in response to the rotation of the first worm (15). The sun gear (32) is connected to an input worm wheel (26) and rotates in response to the rotation of the input worm wheel (26). Each of the plurality of planetary gears (33) meshes with the internal teeth of the planetary worm wheel (31) and the external teeth of the sun gear (32).

## Description

### TECHNICAL FIELD

The present invention relates to a speed change mechanism.

### BACKGROUND ART

Patent Document 1 discloses a gear system including a planetary gear mechanism. The gear system includes a first gear part, a second gear part that meshes with the first gear part, a third gear part that meshes with at least one of the first and second gear parts, and a drive source. Two of the first to third gear parts serve as input parts that receive drive force transmitted from the drive source. Further, the remaining gear part serves as an output part that outputs a resultant force of the combined drive forces of the input parts. According to the gear system disclosed in Patent Document 1, the output characteristic of even a small robot can be freely changed since an output of high speed-low torque and an output of low speed-high torque can be produced through the combination of two input characteristics.

### RELATED DOCUMENT

### PATENT DOCUMENT

[Patent Document 1] Japanese Unexamined Patent Application Publication (Translation of PCT Application) No. 2013-537290

### SUMMARY OF THE INVENTION

### TECHNICAL PROBLEM

The technique of Patent Document 1 has a problem of an increased number of parts, thus hindering a reduction in weight, size, and cost.

In the case of an example shown in Fig. 2 of Patent Document 1, a first gear part 110 and a second gear part 120 serve as input parts and a third gear part 130 serves as an output part. The rotational force of the third gear part 130 is taken out through a plurality of parts, specifically, a third connecting gear 131, an output gear 132, and an output shaft 133.

In a case in which the third gear part 130 serves as an input part, the drive force of the drive source is transmitted to the third gear part 130 through a plurality of parts, specifically, the third connecting gear 131, the output gear 132, and the output shaft 133.

In either case, there is the problem of an increased number of parts, hindering a reduction in weight, size, and cost.

An object of the invention is to provide a technique that can achieve a reduction in weight, size, and cost of a speed change mechanism including a planetary gear mechanism in comparison with the related art.

### SOLUTION TO PROBLEM

According to the invention, there is provided a speed change mechanism that includes a first input section, a second input section, a planetary gear mechanism, and an output section. The first input section includes a first motor unit, and a first worm that rotates in response to the drive of the first motor unit. The second input section includes a second motor unit, a second worm that rotates in response to the drive of the second motor unit, and an input worm wheel that rotates in response to the rotation of the second worm by transmission of rotational force of the first worm to the external teeth. The planetary gear mechanism includes a planetary worm wheel that includes internal teeth and external teeth and rotates in response to the rotation of the first worm by transmission of rotational force of the first worm to the external teeth, a sun gear that rotates in response to rotation of the input worm wheel, and a plurality of planetary gears that mesh with the internal teeth of the planetary worm wheel and external teeth of the sun gear. The output section includes an output mechanism that takes out revolving forces of the plurality of planetary gears.

### ADVANTAGEOUS EFFECTS OF INVENTION

According to the invention, a technique is achieved allowing a reduction in weight, size, and cost of a speed change mechanism including a planetary gear mechanism in comparison with the related art.

### BRIEF DESCRIPTION OF THE DRAWINGS

The object, other objects, features, and advantages of the invention become more apparent from the description of preferred example embodiments with reference to accompanying drawings.

Fig. 1 is a view showing an example of a conceptual diagram of a speed change mechanism of an example embodiment.
Fig. 2 is a diagram showing an example of the speed change mechanism of the example embodiment.
Fig. 3 is a diagram showing the example of the speed change mechanism of the example embodiment.
Fig. 4 is a view showing another example of the conceptual diagram of the speed change mechanism of the example embodiment.
Fig. 5 is a view showing still another example of the conceptual diagram of the speed change mechanism of the example embodiment.

### DESCRIPTION OF EXAMPLE EMBODIMENTS

Speed change mechanisms of example embodiments will be described below with reference to the drawings. The speed change mechanisms shown in the drawings are merely illustrative, and a speed change mechanism of the invention is not limited thereto.

### <First example embodiment>

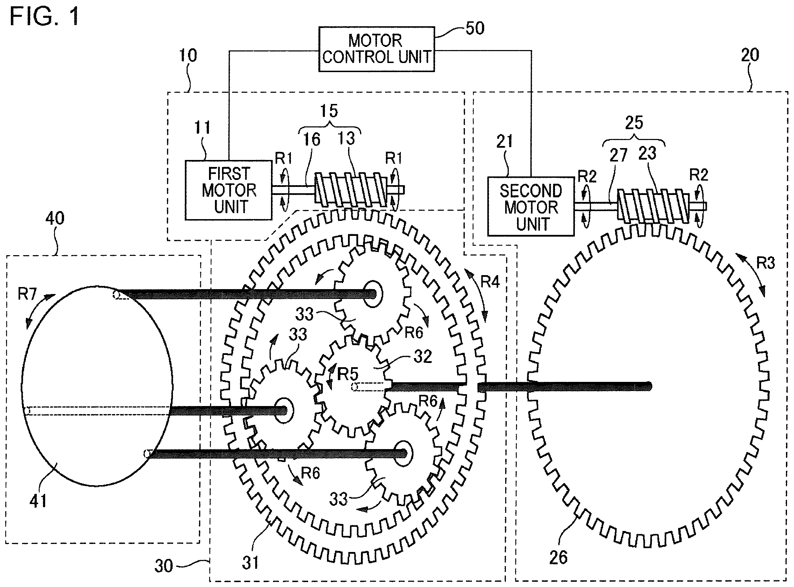

Fig. 1 shows an example of a conceptual diagram of a speed change mechanism of the first example embodiment. As shown in Fig. 1, the speed change mechanism of the first example embodiment includes a first input section 10, a second input section 20, a planetary gear mechanism 30, and an output section 40. The speed change mechanism of the example embodiment may further include a motor control unit 50.

The first input section 10 includes a first motor unit 11 and a first worm 15.

The first motor unit 11 includes a so-called electric motor. The first motor unit 11 can change the rotational direction and the number of revolutions (rotational speed, rpm) of the electric motor. For example, the first motor unit 11 includes an inverter. The inverter changes the rotational direction and the number of revolutions of the electric motor according to control signals inputted from the motor control unit 50.

The first worm 15 is connected to the first motor unit 11, and rotates in response to the drive of the first motor unit 11.

The first worm 15 includes a first shaft portion 16 that linearly extends in one direction. The first shaft portion 16 is provided with a first groove part 13 that transmits a force to external teeth of a planetary worm wheel 31 to be described below. For example, the first groove part 13 and the external teeth of the planetary worm wheel 31 may mesh with each other, or an optional force transmission mechanism may be provided therebetween.

The first shaft portion 16 rotates in response to the drive of the first motor unit 11. Specifically, the first shaft portion 16 rotates with a shaft (central shaft) positioned inside (at the center of) the first shaft portion 16 and extending in parallel with the first shaft portion 16 as a rotation axis. That is, the first shaft portion 16 rotates as shown by an arrow R1 of Fig. 1. The first groove part 13 also rotates in response to the rotation of the first shaft portion 16.

The first shaft portion 16 may be directly connected to the first motor unit 11, or an optional transmission mechanism may be present therebetween. The transmission mechanism is only required to be capable of transmitting a drive force of the first motor unit 11 to the first shaft portion 16, and the detailed structure of the transmission mechanism is not particularly limited.

The second input section 20 includes a second motor unit 21, a second worm 25, and an input worm wheel 26.

The second motor unit 21 includes a so-called electric motor. The second motor unit 21 can change the rotational direction and the number of revolutions (rotational speed, rpm) of the electric motor. For example, the second motor unit 21 includes an inverter. The inverter changes the rotational direction and the number of revolutions of the electric motor according to control signals inputted from the motor control unit 50.

The motor control unit 50 can individually control the operations of the first and second motor units 11 and 21. That is, the motor control unit 50 can control the first and second motor units 11 and 21 so that the operating states of the first and second motor units 11 and 21 are different from each other. On the other hand, the motor control unit 50 can also control the first and second motor units 11 and 21 so that the operating states of the first motor unit 11 and the second motor unit 21 are the same as each other. The operating state is specified by the rotational direction and the number of revolutions of the electric motor.

An arbitrary instruction signal is input to the motor control unit 50. The motor control unit 50 determines the optimum operating states of the first and second motor units 11 and 21 on the basis of the instruction signal, and controls the first and second motor units 11 and 21 so that the first and second motor units 11 and 21 are in the determined operating states.

The motor control unit 50 is implemented by any combination of hardware and software mainly selected from a central processing unit (CPU) of an arbitrary computer, a memory, a program to be loaded onto the memory, a storage unit, such as a hard disk storing the program, (which can also store programs downloaded from a storage medium, such as a compact disc (CD), a server on the Internet, or the like in addition to programs stored in advance from a step in which a device is shipped), and an interface for network connection. Further, those skilled in the art understand that a method of implementing the motor control unit 50 has various modification examples.

The second worm 25 is connected to the second motor unit 21, and rotates in response to the drive of the second motor unit 21.

The second worm 25 includes a second shaft portion 27 that linearly extends in one direction. The second shaft portion 27 is provided with a second groove part 23 that transmits a force to external teeth of the input worm wheel 26. For example, the second groove part 23 and the external teeth of the input worm wheel 26 may mesh with each other, or an optional force transmission mechanism may be provided therebetween.

The second shaft portion 27 rotates in response to the drive of the second motor unit 21. Specifically, the second shaft portion 27 rotates with a shaft (central shaft) positioned inside (at the center of) the second shaft portion 27 and extending in parallel with the second shaft portion 27 as a rotation axis. That is, the second shaft portion 27 rotates as shown by an arrow R2 of Fig. 1. The second groove part 23 also rotates in response to the rotation of the second shaft portion 27.

The second shaft portion 27 may be directly connected to the second motor unit 21, and an optional transmission mechanism may be present therebetween. The transmission mechanism is only required to be capable of transmitting drive force of the second motor unit 21 to the second shaft portion 27, and the detailed structure of the transmission mechanism is not particularly limited.

The rotational force of the second worm 25 is transmitted to the external teeth of the input worm wheel 26. For example, the external teeth of the input worm wheel 26 and the second groove part 23 of the second worm 25 may mesh with each other. Accordingly, the input worm wheel 26 rotates in response to the rotation (see R2) of the second worm 25 (the second shaft portion 27). That is, the input worm wheel 26 rotates as shown by an arrow R3 of Fig. 1.

The planetary gear mechanism 30 includes the planetary worm wheel 31, a sun gear 32, and a plurality of planetary gears 33.

The planetary worm wheel 31 includes internal teeth and external teeth. The rotational force of the first worm 15 is transmitted to the external teeth of the planetary worm wheel 31. For example, the external teeth of the planetary worm wheel 31 and the first groove part 13 of the first worm 15 may mesh with each other. Accordingly, the planetary worm wheel 31 rotates in response to the rotation (see R1) of the first worm 15 (the first shaft portion 16). That is, the planetary worm wheel 31 rotates as shown by an arrow R4 of Fig. 1.

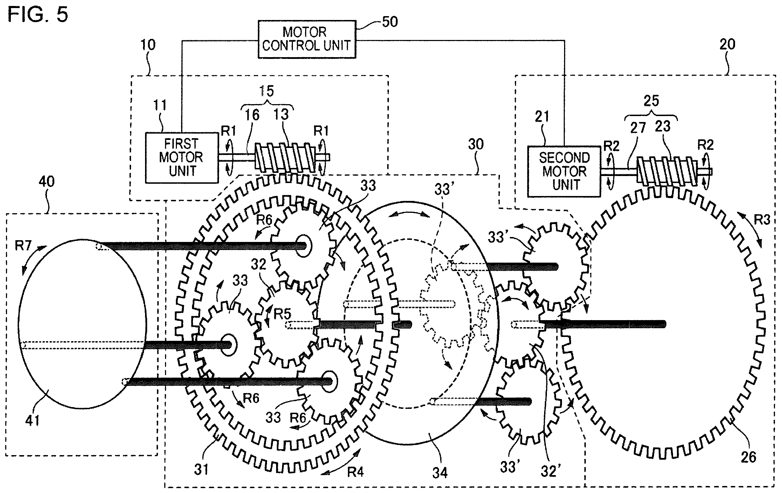

The rotational force of the input worm wheel 26 is transmitted to the sun gear 32. For example, the input worm wheel 26 and the sun gear 32 may be directly connected to each other so that the side surface of the input worm wheel 26 and the side surface of the sun gear 32 are in contact with each other or may be connected to each other through a member, such as a shaft. In addition, the input worm wheel 26 and the sun gear 32 may be connected to each other through another planetary gear mechanism as shown in Fig. 5. In both cases, the rotation axis of the sun gear 32 and the rotation axis of the input worm wheel 26 are coaxially positioned. Accordingly, the sun gear 32 rotates in response to the rotation (see R3) of the input worm wheel 26 as shown by an arrow R5 of Fig. 1.

Here, an example of Fig. 5 will be described in brief. Fig. 5 illustrates a two-stage planetary gear mechanism to increase a reduction gear ratio. However, the planetary gear mechanism may have a multistage structure.

In the case of the example of Fig. 5, for example, the input worm wheel 26 and a sun gear 32' of an added planetary gear mechanism are directly connected to each other so that the side surface of the input worm wheel 26 and the side surface of the sun gear 32' are in contact with each other or are connected to each other through a member, such as a shaft. The sun gear 32' rotates in response to the rotation (see R3) of the input worm wheel 26. The sun gear 32' meshes with a plurality of planetary gears 33' of the added planetary gear mechanism. The plurality of planetary gears 33' revolve in response to the rotation of the sun gear 32'. The plurality of planetary gears 33' are directly connected to a rotary member 34 so that the side surfaces of the plurality of planetary gears 33' are in contact with the side surface of the rotary member 34 or the plurality of planetary gears 33' are connected to the rotary member 34 through members, such as shafts. The rotary member 34 rotates in response to the revolution of the plurality of planetary gears 33'. For example, the rotary member 34 and the sun gear 32 are directly connected to each other so that the side surface of the rotary member 34 and the side surface of the sun gear 32 are in contact with each other or are connected to each other through a member, such as a shaft. The sun gear 32 rotates in response to the rotation of the rotary member 34.

Returning to Fig. 1, each of the plurality of planetary gears 33 meshes with the internal teeth of the planetary worm wheel 31 and the external teeth of the sun gear 32. Accordingly, the plurality of planetary gears 33 revolve in response to the rotation (see R4) of the planetary worm wheel 31 and the rotation (see R5) of the sun gear 32. That is, the plurality of planetary gears 33 revolve around the sun gear 32 as shown by R6 of Fig. 1. The axis of the rotation of the planetary worm wheel 31, the axis of the rotation of the sun gear 32, and the axis of the revolution of the plurality of planetary gears 33 are coaxially positioned.

The planetary gear mechanism 30, which includes the planetary worm wheel 31, the sun gear 32, and the planetary gears 33, can employ every structure according to the related art.

For example, the number of the plurality of planetary gears 33 is not limited to 3 shown in Fig. 1, and may be other numbers.

In addition, Fig. 1 schematically shows a planar positional relationship of the planetary worm wheel 31, the sun gear 32, and the planetary gears 33. For this reason, all of the sun gear 32 and the planetary gears 33 are in the interior of the planetary worm wheel 31.

However, the positional relationship of the planetary worm wheel 31 and the sun gear 32 of the planetary gear mechanism 30 of the example embodiment, specifically, the positions of the planetary worm wheel 31 and the sun gear 32 in a direction perpendicular to the plane of Fig. 1, may be deviated from each other or may be at substantially the same positions. In a case in which the planetary worm wheel 31 and the sun gear 32 are substantially at the same positions, the sun gear 32 and the planetary gears 33 are in the interior of the planetary worm wheel 31.

For example, structural examples of deviated positions include a case in which the planetary gears 33 linearly extend in the direction perpendicular to the plane of Fig. 1, a part of the planetary gears 33 are in the interior of the planetary worm wheel 31 and mesh with the internal teeth of the planetary worm wheel 31, and the other part of the planetary gears 33 not in the interior of the planetary worm wheel 31 mesh with the sun gear 32, or the like. In this case, the sun gear 32 is not in the interior of the planetary worm wheel 31.

The output section 40 includes an output mechanism that takes out revolving (see R6) forces of the plurality of planetary gears 33. For example, the output section 40 includes an output member 41 as the output mechanism. The output member 41 is connected to each of the plurality of planetary gears 33, and rotates in response to the revolution of the plurality of planetary gears 33. The structure of the output mechanism is not particularly limited, and the output mechanism can employ every structure.

The axis of the revolution of the plurality of planetary gears 33 and the axis of the rotation of the output member 41 are coaxially positioned. That is, in the case of this example embodiment, the axis of the rotation of the input worm wheel 26, the axis of the rotation of the planetary worm wheel 31, the axis of the rotation of the sun gear 32, the axis of the revolution of the plurality of planetary gears 33, and the axis of the rotation of the output member 41 are coaxially positioned.

Next, an operation example of an example of the speed change mechanism of the first example embodiment will be described.

First, an optional instruction signal is inputted to the motor control unit 50. The motor control unit 50 determines the optimum operating states of the first and second motor units 11 and 21 on the basis of the instruction signal, and controls the first and second motor units 11 and 21 so that the first and second motor units 11 and 21 are in the determined operating states.

The first and second motor units 11 and 21 operate in predetermined operating states according to control signals that are input from the motor control unit 50. That is, each of the first and second motor units 11 and 21 operates the electric motor in a rotational direction and the number of revolutions that are specified by the control signals input from the motor control unit 50.

For example, the motor control unit 50 may operate only the second motor unit 21 in a predetermined rotational direction with a predetermined number of revolutions while stopping the first motor unit 11. Further, the motor control unit 50 may operate only the first motor unit 11 in a predetermined rotational direction with a predetermined number of revolutions while stopping the second motor unit 21. Furthermore, the motor control unit 50 may stop both the first and second motor units 11 and 21. Moreover, the motor control unit 50 may operate both the first and second motor units 11 and 21 in predetermined rotational directions and predetermined numbers of revolutions.

When the first motor unit 11 rotates, the planetary worm wheel 31 rotates in a predetermined direction with a predetermined number of revolutions in response to the rotation of the first motor unit 11. When the first motor unit 11 is in a stopped state, the planetary worm wheel 31 is also in a stopped state.

Further, when the second motor unit 21 rotates, the input worm wheel 26 rotates in a predetermined direction with a predetermined number of revolutions. Accordingly, the sun gear 32 rotates in a predetermined direction with a predetermined number of revolutions in response to the rotation of the input worm wheel 26. When the second motor unit 21 is in a stopped state, the planetary worm wheel 31 is also in a stopped state. Accordingly, the sun gear 32 is also in a stopped state.

The plurality of planetary gears 33 are in a state in response to the state of the planetary worm wheel 31 and the state of the sun gear 32. In a case in which at least one of the planetary worm wheel 31 and the sun gear 32 is rotating, the plurality of planetary gears 33 revolve around the sun gear 32. Then, the revolving forces of the plurality of planetary gears 33 are taken out through the output section 40. In the case of a state in which both the planetary worm wheel 31 and the sun gear 32 is stopped, the plurality of planetary gears 33 are also stopped.

The motor control unit 50 is in an instruction signal waiting state. Then, when the motor control unit 50 receives a new instruction signal, the motor control unit 50 determines the optimum operating states of the first and second motor units 11 and 21 on the basis of the new instruction signal and controls the first and second motor units 11 and 21 so that the first and second motor units 11 and 21 are in the determined operating states. Subsequently, the motor control unit 50 repeats the above-mentioned processing.

Next, the functional effect of the speed change mechanism of this example embodiment will be described.

The planetary worm wheel 31 of the planetary gear mechanism 30 of this example embodiment includes the internal teeth and the external teeth. Further, the external teeth mesh with the first worm 15. Accordingly, the rotational force of the first worm 15 in response to the drive of the first motor unit 11 is transmitted to the planetary worm wheel 31.

In the case of the first example embodiment using the planetary worm wheel 31 including the internal teeth and the external teeth as described above, the drive force of the first motor unit 11 can be transmitted to the planetary worm wheel 31 through a number of parts that is smaller in comparison with a technique disclosed in Patent Document 1. As a result, a reduction in weight, size, and cost of not only the planetary gear mechanism 30 but also the speed change mechanism can be achieved by the reduction in the number of parts.

Further, the speed change mechanism of this example embodiment can individually control the operations (the rotational directions and the numbers of revolutions) of the first and second motor units 11 and 21 by control of the motor control unit 50. The rotation (the rotational direction and the number of revolutions) of the planetary worm wheel 31 can be controlled by controlling the operation of the first motor unit 11. Furthermore, the rotation (the rotational direction and the number of revolutions) of the sun gear 32 can be controlled by controlling the operation of the second motor unit 21. Accordingly, the revolution (the rotational directions and the numbers of revolutions) of the plurality of planetary gears 33 can be controlled by appropriately controlling the operations of the first and second motor units 11 and 21. As a result, the rotational direction, the number of revolutions, the torque, and the like of the output member 41 can be appropriately controlled.

For example, when the first motor unit 11 is stopped and the rotation of the first worm 15 is stopped, the planetary worm wheel 31 becomes restricted. When only the second motor unit 21 is operated in a state in which the first motor unit 11 is controlled as described above, a reduction gear ratio at which the maximum torque is outputted can be obtained.

Further, when the second motor unit 21 is stopped and the rotation of the second worm 25 is stopped, the sun gear 32 becomes restricted. When only the first motor unit 11 is operated in a state in which the second motor unit 21 is controlled as described above, a reduction gear ratio at which the maximum speed is outputted is obtained.

Furthermore, when the first and second motor units 11 and 21 are simultaneously operated and the planetary worm wheel 31 and the sun gear 32 are simultaneously rotated, a reduction gear ratio at which the medium torque and speed are output can be steplessly configured.

Moreover, the first and second motor units 11 and 21 of the speed change mechanism of this example embodiment are structured by so-called electric motors. For this reason, the operations (the rotational directions and the numbers of revolutions) of the first and second motor units 11 and 21 can be accurately switched with good response performance (switching of a high reduction gear ratio).

The use of the speed change mechanism of the example embodiment is not particularly limited, and the speed change mechanism of the example embodiment can be used for a joint drive mechanism and the like of, for example, a robot, more specifically, a legged robot.

Most joint drive mechanisms for legged robots in the related art use a single reduction gear ratio, thus a high-speed movement for an approach to contact the ground or contact an object, and a high-torque operation at the time of contacting the ground have not been conventionally compatible with each other. Further, even with a transmission combining different reduction gear ratios, conventional mechanisms for legged robots had the problem of being easily damaged by impact from its own weight during walking by legs or by external impact due to an increase in size and weight of a joint mechanism caused by combinations of clutch mechanisms and a plurality of gears.

When the speed change mechanism of the present example embodiment is used, a reduction gear ratio corresponding to high-speed movement and a high-torque operation can be steplessly adjusted by a single small gearbox. That is, when the speed change mechanism of this example embodiment is used for the joint drive mechanism of the legged robot, high-speed movement required for an approach of contacting the ground or contacting an object, and high-torque operation at the time of contacting the ground are compatible with each other.

Further, when the speed change mechanism of this example embodiment is used, the size and weight of a gear can be reduced with a reduction in the number of parts and use of a coaxial mechanism. Thus, for example, it is easy to widen an operable range while preventing the interference between the speed change mechanism and other leg joints, by a reduction in the size of the speed change mechanism. Furthermore, since the size of the speed change mechanism can be reduced, both a large speed change mechanism and a small speed change mechanism having the same structure can be realized. For this reason, both a large joint for large output, such as the knee of a leg or a hip portion, and a small joint, such as a fingertip or a wrist, can be realized by the speed change mechanism of this example embodiment. As a result, an effect of easily making a design is expected in comparison with a case in which speed change mechanisms of different designs are used for a large joint and a small joint.

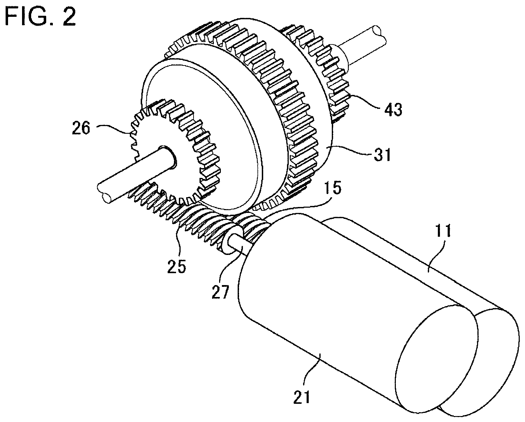

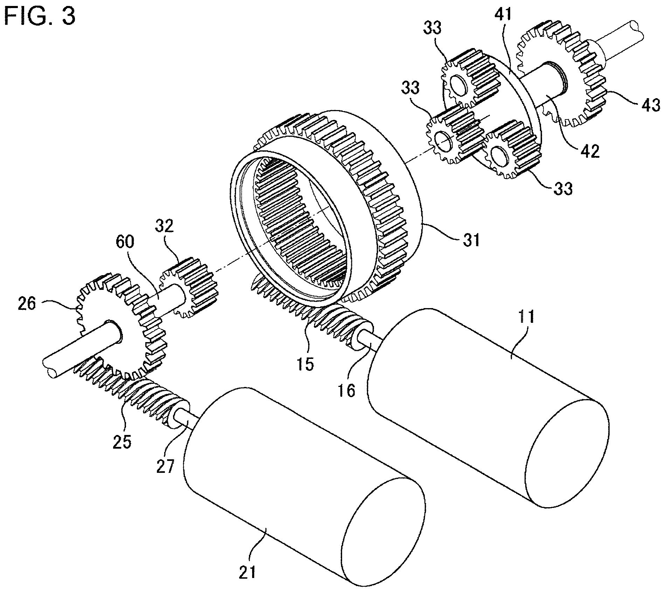

Here, Fig. 2 shows an example of the speed change mechanism of this example embodiment. Further, Fig. 3 is an exploded view of the speed change mechanism of Fig. 2. The speed change mechanism shown in Figs. 2 and 3 is an example showing that the speed change mechanism of this example embodiment can be realized, and the speed change mechanism of the example embodiment is not limited to the speed change mechanism shown in Figs. 2 and 3. In Figs. 2 and 3, a member corresponding to each member shown in Fig. 1 is denoted by the same reference numeral as the same reference numeral of Fig. 1. Further, the motor control unit 50 is not shown in Figs. 2 and 3.

In the case of the example, the sun gear 32 and the input worm wheel 26 are connected to each other by an input shaft 60. The rotational force of the output member 41 is taken out through an output shaft 42 and an output gear 43.

### <Second example embodiment>

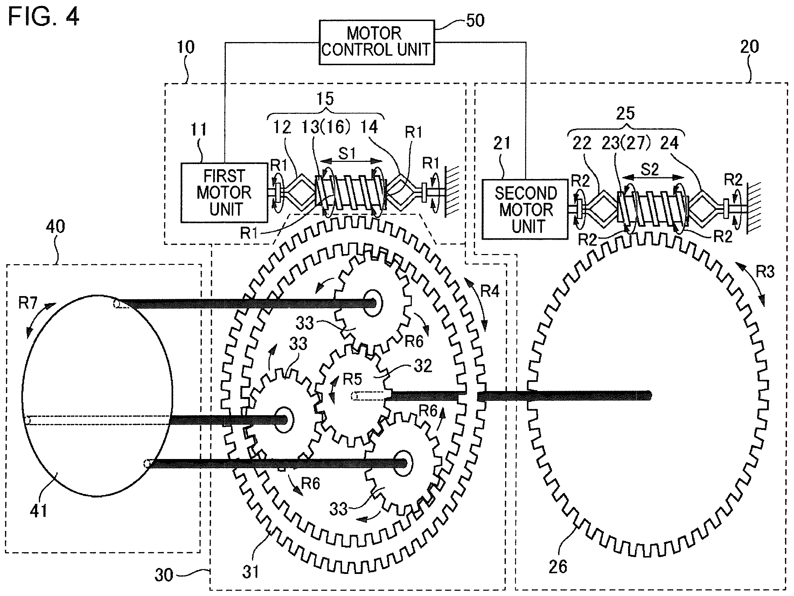

Fig. 4 shows an example of a conceptual diagram of a speed change mechanism of the second example embodiment. As shown in Fig. 4, the speed change mechanism of this example embodiment is different from that of the first example embodiment in terms of the structure of a first input section 10 and the structure of a second input section 20. The structure of a planetary gear mechanism 30, the structure of an output section 40, and the structure of the motor control unit 50 are the same as those of the first example embodiment. Although not shown, only one of the first and second input sections 10 and 20 may have a structure to be described below and the other thereof may have the same structure as the first example embodiment.

A first worm 15 of the first input section 10 can include a cushioning portion 12 (1-1) (first cushioning portion). The cushioning portion 12 (1-1) is positioned between a first groove part 13 and a first motor unit 11. That is, the first groove part 13 and the first motor unit 11 are connected to each other via the cushioning portion 12 (1-1).

When a force causing the first groove part 13 to slide (example: a force applied in a direction horizontal to the rotation axis of the first motor unit 11 or the first worm 15) is applied to the first worm 15, the cushioning portion 12 (1-1) absorbs the force. The force causing the first groove part 13 to slide is caused by, for example, a force that is different from the rotation of the first worm 15 caused by the first motor unit 11, and is generated when the planetary worm wheel 31 is about to rotate.

The cushioning portion 12 (1-1) is formed of, for example, a spring. The first groove part 13 is slidably movable in a direction of S1 shown in Fig. 4 by the cushioning portion 12 (1-1) that is positioned between the first motor unit 11 and the first groove part 13.

As shown in Fig. 4, the first groove part 13 may be interposed between the cushioning portion 12 (1-1) (first cushioning portion) and a cushioning portion 14 (1-2) (first cushioning portion). The cushioning portion 14 (1-2) is also formed of, for example, a spring. One end (an end opposite to the first groove part 13) of the cushioning portion 14 (1-2) is connected and fixed to a member that is fixed at a predetermined position. At this time, the end portion is fixed so as to be rotatable in a rotation direction (R1) of the first worm 15. A unit that fixes the end portion is a matter of design.

Further, one end (an end opposite to the first groove part 13) of the cushioning portion 12 (1-1) is also connected and fixed to the first motor unit 11 that is fixed at a predetermined position. At this time, the end portion is fixed so as to be rotatable in the rotation direction (R1) of the first worm 15. A unit that fixes the end portion is a matter of design.

In the case of this structure, the position of the first groove part 13 in a sliding direction (the direction of S1 shown in Fig. 4) can be limited to a desired position (a position at which the first groove part 13 meshes with the external teeth of the planetary worm wheel 31) by the cushioning portion 12 (1-1) and the cushioning portion 14 (1-2).

A second worm 25 of the second input section 20 can include a cushioning portion 22 (2-1) (second cushioning portion). The cushioning portion 22 (2-1) is positioned between a second groove part 23 and a second motor unit 21. That is, the second groove part 23 and the second motor unit 21 are connected to each other by the cushioning portion 22 (2-1).

When a force causing the second groove part 23 to slide (example: a force applied in a direction horizontal to the rotation axis of the second motor unit 21 or the second worm 25) is applied to the second worm 25, the cushioning portion 22 (2-1) absorbs the force. The force causing the second groove part 23 to slide is caused by, for example, a force that is different from the rotation of the second worm 25 caused by the second motor unit 21, and is generated when an input worm wheel 26 is about to rotate.

The cushioning portion 22 (2-1) is formed of, for example, a spring. The second groove part 23 is slidably movable in a direction of S2 shown in Fig. 4 by the cushioning portion 22 (2-1) that is positioned between the second motor unit 21 and the second groove part 23.

As shown in Fig. 4, the second groove part 23 may be interposed between the cushioning portion 22 (2-1) (second cushioning portion) and a cushioning portion 24 (2-2) (second cushioning portion). The cushioning portion 24 (2-2) is also formed of, for example, a spring. One end (an end opposite to the first groove part 13) of the cushioning portion 24 (2-2) is connected and fixed to a member that is fixed at a predetermined position. At this time, the end portion is fixed so as to be rotatable in a rotation direction (R2) of the second worm 25. A unit that fixes the end portion is a matter of design.

Further, one end (an end opposite to the second groove part 23) of the cushioning portion 22 (2-1) is also connected and fixed to the second motor unit 21 that is fixed at a predetermined position. At this time, the end portion is fixed so as to be rotatable in the rotation direction (R2) of the second worm 25. A unit that fixes the end portion is a matter of design.

In the case of this structure, the position of the second groove part 23 in a sliding direction (the direction of S2 shown in Fig. 4) can be limited to a desired position (a position at which the second groove part 23 meshes with the external teeth of the input worm wheel 26) by the cushioning portion 22 (2-1) and the cushioning portion 24 (2-2).

According to this example embodiment described above, a speed change mechanism resistant to a load such as an impact applied from the outside is achieved.

For example, there is a case where a rotational (rotating or revolving) force is unintentionally applied to some gears due to a load such as an impact is applied from the outside. There is a case where a part of the mechanism becomes damaged due to such a rotation.

For example, when a force causing the planetary worm wheel 31 shown in Fig. 4 to rotate is unintentionally applied, a force caused by the rotation of the planetary worm wheel 31 is applied to the first groove part 13 of the first worm 15. As a result, the external teeth of the planetary worm wheel 31 or a part of the first groove part 13 may become chipped or bent. In addition, the force caused by the rotation of the planetary worm wheel 31 may be applied to the first motor unit 11 through the first worm 15. As a result, failure may occur in the first motor unit 11.

In the case of this example embodiment in which the cushioning portion 12 (1-1) can be provided, the cushioning portion 12 (1-1) absorbs such a force. As a result, the above-mentioned disadvantages can be reduced.

Likewise, for example, when a force causing the input worm wheel 26 shown in Fig. 4 to rotate is applied, a force caused by the rotation of the input worm wheel 26 is applied to the second groove part 23 of the second worm 25. As a result, the external teeth of the input worm wheel 26 or a part of the second groove part 23 may become chipped or bent. In addition, the force caused by the rotation of the input worm wheel 26 may be applied to the second motor unit 21 through the second worm 25. As a result, failure may occur in the second motor unit 21.

In the case of this example embodiment in which the cushioning portion 22 (2-1) can be provided, the cushioning portion 22(2-1) absorbs such a force. As a result, the above-mentioned disadvantages can be reduced.

For example, in a case in which the speed change mechanism of this example embodiment is used for a joint drive mechanism and the like of a robot, more specifically, a legged robot, an impact caused by its own weight at the time of walking or an impact and the like caused when the legged robot jumps from a high position or lands after jumping are applied to the speed change mechanism. Due to the impact, unintended forces, which cause the input worm wheel 26 and the planetary worm wheel 31 to rotate, may be applied to the input worm wheel 26 and the planetary worm wheel 31. As a result, failure may occur in the speed change mechanism. According to the speed change mechanism of this example embodiment, these disadvantages can be reduced.

An example of a referential form will be added below.
1. A speed change mechanism including:
   a first input section;
   a second input section;
   a planetary gear mechanism; and
   an output section,
   wherein the first input section includes a first motor unit, and a first worm that rotates in response to the drive of the first motor unit,
   wherein the second input section includes a second motor unit, a second worm that rotates in response to the drive of the second motor unit by transmission of rotational force of the second worm to the external teeth, and an input worm wheel that rotates in response to the rotation of the second worm,
   wherein the planetary gear mechanism includes a planetary worm wheel that includes internal teeth and external teeth and rotates in response to the rotation of the first worm by transmission of rotational force of the first worm to the external teeth, a sun gear that rotates in response to the rotation of the input worm wheel, and a plurality of planetary gears that mesh with the internal teeth of the planetary worm wheel and external teeth of the sun gear, and
   wherein the output section includes an output mechanism that takes out revolving forces of the plurality of planetary gears.
2. The speed change mechanism according to 1, further including:
   a motor control unit that individually controls an operation of the first motor unit and an operation of the second motor unit.
3. The speed change mechanism according to 1 or 2,
   wherein the first worm includes a first groove part formed with a groove meshing with the external teeth of the planetary worm wheel, and a first cushioning portion that absorbs a force applied to the first groove part in a direction horizontal to a rotation axis of the first motor unit.
4. The speed change mechanism according to 3,
   wherein the first cushioning portion includes a cushioning portion 1-2 and a cushioning portion 1-2, and
   the first groove part is positioned between the cushioning portion 1-1 and the cushioning portion 1-2.
5. The speed change mechanism according to any one of 1 to 4,
   wherein the second worm includes a second groove part formed with a groove meshing with the external teeth of the input worm wheel, and a second cushioning portion that absorbs a force applied to the second groove part in a direction horizontal to a rotation axis of the second motor unit.
6. The speed change mechanism according to 5,
   wherein the second cushioning portion includes a cushioning portion 2-1 and a cushioning portion 2-2, and
   the second groove part is positioned between the cushioning portion 2-1 and the cushioning portion 2-2.

This application claims priority based on Japanese Patent Application No. 2015-116311 filed on June 9, 2015, and the entire contents thereof are incorporated herein.

## Claims

1. A speed change mechanism comprising:
a first input section;
a second input section;
a planetary gear mechanism; and
an output section,
wherein the first input section comprises:
a first motor unit; and
a first worm that rotates in response to the drive of the first motor unit,
wherein the second input section comprises:
a second motor unit;
a second worm that rotates in response to the drive of the second motor unit; and
an input worm wheel that rotates in response to the rotation of the second worm by transmission of a rotational force of the second worm to external teeth of the input worm wheel,
wherein the planetary gear mechanism comprises:
a planetary worm wheel that comprises internal teeth and external teeth and that rotates in response to the rotation of the first worm by transmission of a rotational force of the first worm to the external teeth;
a sun gear that rotates in response to the rotation of the input worm wheel; and
a plurality of planetary gears that mesh with the internal teeth of the planetary worm wheel and external teeth of the sun gear, and
wherein the output section comprises an output mechanism that takes out revolving forces of the plurality of planetary gears.

2. The speed change mechanism according to claim 1, further comprising:
a motor control unit that individually controls an operation of the first motor unit and an operation of the second motor unit.

3. The speed change mechanism according to claim 1 or 2,
wherein the first worm comprises:
a first groove part formed with a groove meshing with the external teeth of the planetary worm wheel; and
a first cushioning portion that absorbs a force applied to the first groove part in a direction horizontal to a rotation axis of the first motor unit.

4. The speed change mechanism according to claim 3,
wherein the first cushioning portion comprises a cushioning portion 1-1 and a cushioning portion 1-2, and
wherein the first groove part is positioned between the cushioning portion 1-1 and the cushioning portion 1-2.

5. The speed change mechanism according to any one of claims 1 to 4,
wherein the second worm comprises:
a second groove part formed with a groove meshing with the external teeth of the input worm wheel; and
a second cushioning portion that absorbs a force applied to the second groove part in a direction horizontal to a rotation axis of the second motor unit.

6. The speed change mechanism according to claim 5,
wherein the second cushioning portion comprises: a cushioning portion 2-1 and a cushioning portion 2-2, and
wherein the second groove part is positioned between the cushioning portion 2-1 and the cushioning portion 2-2.
